# EUROPEAN PATENT SPECIFICATION

(11) **EP 2 045 101 B1**
(45) Date of publication and mention of the grant of the patent: **13.06.2012**
(21) Application number: 07790252.6
(22) Date of filing: 12.07.2007
(51) Int. Cl.: F16J 15/32, G01P 3/44, F16C 33/78, B60B 27/00

(54) **BEARING DEVICE FOR DRIVE WHEEL**
LAGERVORRICHTUNG FÜR ANTRIEBSRAD
DISPOSITIF DE PALIER POUR ROUE MOTRICE

(30) Priority: 18.07.2006 JP 2006196025
(43) Date of publication of application: 08.04.2009
(73) Proprietor: NTN Corporation, Osaka-shi, Osaka 550-0003 (JP)
(72) Inventor: KAWAMURA, Hiroshi, Iwata-shi Shizuoka 438-8510 (JP); FUKUSHIMA, Shigeaki, Iwata-shi Shizuoka 438-8510 (JP); YAMAUCHI, Kiyoshige, Iwata-shi Shizuoka 438-8510 (JP); OZAWA, Masahiro, Iwata-shi Shizuoka 438-8510 (JP); UMEKIDA, Mitsuru, Iwata-shi Shizuoka 438-8510 (JP)
(74) Representative: Cohausz & Florack
(86) International application number: PCT/JP2007/000756
(87) International publication number: WO 2008/010313

(56) References cited:
- EP-A1- 1 382 466
- JP-A- 5 264 315
- JP-A- 05 264 315
- JP-A- 2001 199 202
- JP-A- 2001 233 010
- JP-A- 2001 233 010
- JP-A- 2001 241 435
- JP-A- 2001 241 435
- JP-A- 2005 324 736
- US-A1- 2004 250 619

## Description

### Field of the Invention

The present invention relates to a wheel bearing apparatus for a driving wheel of vehicle such as an automobile provided with a wheel speed detecting apparatus for detecting a rotation speed of wheel.

### Description of Background Art

It has been generally known a wheel bearing apparatus which can support a wheel of vehicle relative to a suspension apparatus and is provided with a wheel speed detecting apparatus for detecting a rotation speed of wheel to detect the wheel speed for controlling the anti-lock braking system (ABS). Such a bearing apparatus generally comprises a wheel speed detecting apparatus including a magnetic encoder having magnetic poles alternately arranged along its circumferential direction integrated in a sealing apparatus arranged between inner and outer members for containing rolling elements (balls or rollers), and a wheel speed detecting sensor for detecting variations in magnetic poles of the magnetic encoder according to the rotation of wheel. A rotation-support apparatus with a rotation sensor device for a drive-wheel is known from US 2004/250619 A1. JP 2001/241435 A discloses a rolling bearing unit with encoder for automobiles. A wheel rotation support apparatus with an encoder is described in EP 1 382 466 A1. JP 2001/233010 A deals with a rotation transmitting device with a tone wheel. A wheel bearing device is known from JP 2001/199202 A. JP 2005/324736 A relates to a bearing device for a wheel. Finally, a volumetric flowmeter and a method of manufacturing its rotor is described in JP 05/264315 A.

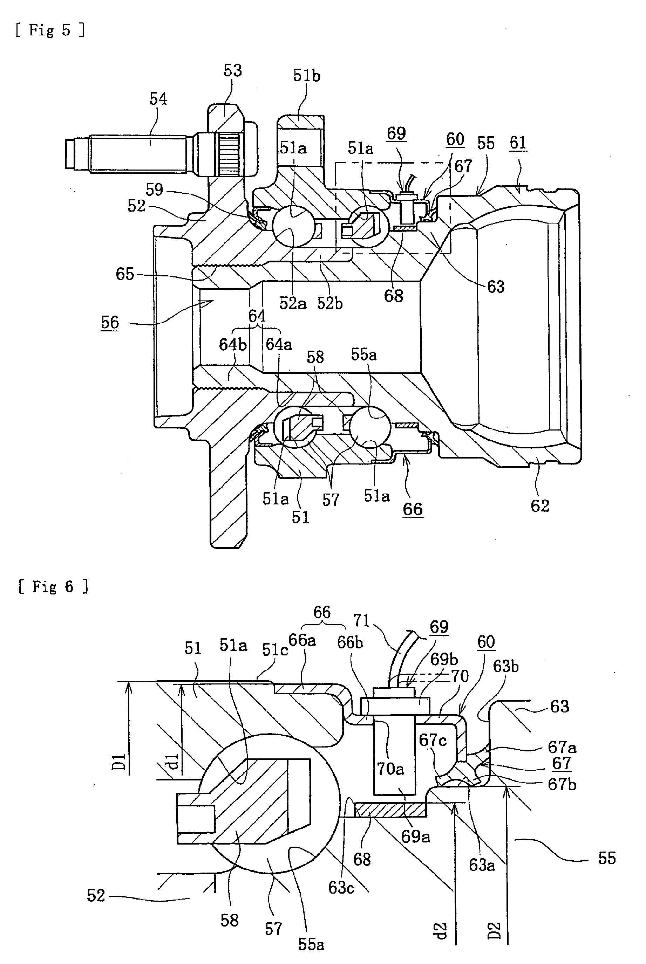

Fig. 5 shows a representative example of such a wheel bearing apparatus for a driving wheel according to the preamble of claim 1 (JP 2005/140146 A). The wheel bearing apparatus comprises an outer member 51 integrally formed, on its outer circumference, with a body (vehicle body) mounting flange 51b to be mounted on a knuckle (not shown) and formed, on its inner circumference, with double row outer raceway surfaces 51a and 51a; and an inner members 56 including a hub wheel 52 and an outer joint member 55 of the constant velocity universal joint 61. The hub wheel 52 has a wheel mounting flange 53 formed integrally therewith at one end thereof on which a plurality of hub bolts 54 for securing a wheel (not shown) are mounted equidistantly along its periphery and also formed, on the outer circumference of the hub wheel 52, with an inner raceway surface 52a corresponding to one of the double row outer raceway surfaces 51a and 51a and formed a cylindrical portion 52b axially extending from the inner raceway surface 52a. The outer joint member 55 is inserted into the cylindrical portion 52b of the hub wheel 52 and formed, on its outer circumference, with another inner raceway surface 55a corresponding to the other of the double row outer raceway surfaces 51a and 51a.

Double row rolling elements (balls) 57 arranged rollably between the outer raceway surfaces 51a and 51a and inner raceway surfaces 52a and 55a and held by cages 58 therein. In addition, seals 59 and 60 are mounted in opening portions of an annular space formed between the outer member 51 and the inner member 56 to prevent leakage of lubricating grease contained within the bearing and entering of rain water or dusts from outside of the bearing.

The outer joint member 55 forming part of the constant velocity universal joint 61 comprises a cup shaped mouth portion 62, a shoulder portion 63 forming the bottom of the mouth portion 62, and a hollow shaft portion 64 axially extending from the shoulder portion 63. The shaft portion 64 has a spigot portion 64a fitted into the cylindrical portion 52b of the hub wheel 52 and a fitting portion 64b at the end of the spigot portion 64a.

An inner circumferential surface of the hub wheel 52 is formed with hardened irregular portion 65. The shaft portion 64 of the outer joint member 55 is fitted into the hub wheel 52. The hub wheel 52 and the outer joint member 55 are integrally connected each other via plastic deformation by expanding the fitting portion 64b of the shaft portion 64 radially outward and by forcing the material of the fitting portion 64b to bite into the hardened irregular portion 65.

The seal 60 arranged at a side of the outer joint member 55 comprises a cover 66 and a sealing member 67. The cover 66 is formed generally in an annular configuration having a crank shaped cross-section by pressing a steel sheet of SPCC etc. That is, as shown in an enlarged view of Fig. 6, the cover 66 has a cylindrical portion 66a of larger diameter and a cylindrical portion 66b of smaller diameter and is fitted on the end 51c of the outer member 51 with being abutted against the end of the outer member 51.

An outer diameter d1 of the cylindrical portion of larger diameter is set so that it is smaller than an outer diameter D1 of the end portion 51c of the outer member 51 (d1 < D1). This enables an inner circumferential edge of the knuckle to be prevented from being interfered by the cylindrical portion 66a of larger diameter during insertion of the knuckle onto the end portion 51c of the outer member 51.

On the other hand, the sealing member 67 is formed of rubber generally in an annular configuration and secured on the cylindrical portion 66b of smaller diameter. Tip ends of a plurality of sealing lips 67a, 67b and 67c are adapted to be slidably contacted with a cylindrical surface 63a and a stepped surface 63b formed on a shoulder of the outer joint member 55.

In addition, a second cylindrical surface 63c having a diameter smaller than that of the cylindrical surface 63a is formed between the inner raceway surface 55a of the outer joint member 55 and the cylindrical surface 63a. A cylindrical encoder 68 is secured on the second cylindrical surface 63c. The encoder 68 is made of rubber magnet in which magnetic poles N and S are alternately arranged along its circumferential direction. An outer diameter d2 of the encoder 68 is set so that it is smaller than that D2 of the cylindrical surface 63a (d2 < D2). This enables the encoder 68 to be prevented from being interfered by the inner circumferential edge of the sealing member 67 during insertion of the outer joint member 55 into the outer member 51.

A sensor 69 is supported on the cover 66. A flat portion 70 extending along an axial direction of the cover 66 is formed on the cover at a portion along the circumferential direction of the smaller cylindrical portion 66b of the cover and a radially extending through aperture 70a for mounting the sensor 69 is formed in the flat portion 70.

The sensor 69 comprises a rod shaped inserting portion 69a formed of synthetic resin and a mounting flange 69b arranged at the base end of the inserting portion 69a. A detecting portion is embedded in the tip end of the inserting portion 69a and a harness 71 having sufficient flexibility is extended from the base end of the sensor 69.

The inserting portion 69a of the sensor 69 is inserted into the inside of the cover 66 from its radially outside through the mounting aperture 70a and the under side of the mounting flange 69b is abutted against the flat portion 70. Under such a condition, the sensor 69 is secured on the cover 66 by fastening means such as screws. The wheel speed detecting apparatus can be completed by arranging the tip end portion of the inserting portion 69a so that it is radially opposed to the outer circumferential surface of the encoder 68.

Dimensions of portions relating to the sensor 69 are limited so that the base end portion of the harness 71 (shown by a two-dot chain line) does not project radially outward under a condition in which the base end portion of the harness 71 are contacted with the base end surface of the sensor 69. In addition, the position of the sensor 69 can be arranged nearer to the axis of the encoder 68 by reducing the dimension of the outer diameter of the encoder 68. Simultaneously the dimension of the outer diameter of the cover 66 supporting the sensor 69 can be also reduced.

Accordingly almost portions of the seal 60 including the encoder 68 and the sensor 69 as well as the cover 66 are arranged within a recessed portion opened radially outward between the outer member 51 and the outer joint member 55. Thus it is possible to detect the rotation of wheel with high reliability and to reduce the size of the wheel bearing apparatus for a driving wheel having the encoder 68 and the sensor 69 (see Japanese Laid-open Patent publication No. 140146/2005).

### Disclosure of the Invention

### Problems to be solved by the Invention

In the wheel bearing apparatus for a driving wheel of the prior art, the dimension of each portion of the harness 71 is limited so that the base end portion of the harness 71 does not project radially outward beyond the end portion 51c of the outer member 51. However since the harness 71 of the sensor 69 sometimes interferes assembly of the wheel bearing apparatus, it is necessary to insert the outer member 51 into the knuckle with the harness 71 being folded. However this makes the assembly of the wheel bearing apparatus troublesome and thus increases assembling steps.

In addition, since it is impossible to assemble the wheel bearing apparatus due to interference of the outer joint member 55 with the knuckle after united connection of the hub wheel 52 and the outer joint member 55 via plastic deformation therebetween, it is necessary to previously secure the outer member 51 to the knuckle before the uniting connection of the hub wheel 52 and the outer joint member 55 via plastic deformation. This makes the assembly of the wheel bearing apparatus further complicate. In addition this makes it impossible to adopt a system of supplying to an automobile manufacturer the wheel bearing apparatus as a so-called axle module (unit of the wheel bearing apparatus, a drive shaft and a constant velocity universal joint at a side of a differential unit (not shown)) so as to enable the automobile manufacturer to assemble the axle module to the knuckle.

It is, therefore, an object of the present invention to provide a wheel bearing apparatus for a driving wheel which can improve workability in assembly and be supplied to an automobile manufacturer as an axle module.

### Means for solving problems

For achieving the object mentioned above, there is provided, according to the present invention of claim 1, a wheel bearing apparatus for a driving wheel formed as a unit of a hub wheel, a double row rolling bearing and a constant velocity universal joint, in which the double row rolling bearing comprising an outer member integrally formed, on its outer circumference, with a body mounting flange to be mounted on a knuckle and formed, on its inner circumference, with double row outer raceway surfaces; an inner member including a hub wheel and an outer joint member of the constant velocity universal joint, the hub wheel having a wheel mounting flange formed integrally therewith at one end thereof and a cylindrical portion axially extending from the wheel mount flange and formed, on the outer circumference of the cylindrical portion, an inner raceway surface corresponding to one of the double row outer raceway surfaces, and the outer joint member being formed, on its outer circumference, with another inner raceway surface corresponding to the other of the double row outer raceway surfaces and having a hollow shaft portion axially extending from said another inner raceway surface to be inserted into the hub wheel; double row rolling elements arranged rollably between the outer and inner raceway surfaces; and seals mounted in opening portions of an annular space formed between the outer member and the inner member at opposite ends thereof; and the hub wheel and the outer joint member being integrally connected via plastic deformation formed by plastically deformation of the shaft portion to caulking it onto the hub wheel characterized in that a sensor is fitted in a mounting aperture formed in the knuckle radially passed therethrough, that a pulser ring is mounted on an inner side of the bearing apparatus from the inner annular space on the outer circumferential surface of the outer joint member so that it is opposed to the sensor via a predetermined radial gap, that the outer diameter of the pulser ring is smaller than the inner diameter of the knuckle, and that the outer diameter of the constant velocity joint is smaller than the inner diameter of the knuckle.

According to the wheel bearing apparatus for a driving wheel of the fourth generation type of the present invention of claim 1 in which the hub wheel and the outer joint member is united via plastic deformation, since it is characterized in that a sensor is fitted in a mounting aperture formed in the knuckle radially passed therethrough, that a pulser ring is mounted on an inner side of the bearing apparatus from the inner annular space on the outer circumferential surface of the outer joint member so that it is opposed to the sensor via a predetermined radial gap, that the outer diameter of the pulser ring is smaller than the inner diameter of the knuckle, and that the outer diameter of the constant velocity joint is smaller than the inner diameter of the knuckle, it is possible to provide a wheel bearing apparatus for a driving wheel which can eliminate a troublesome work, improve the workability in assembly, and supply to an automobile manufacturer the wheel bearing apparatus as a so-called axle module in which the wheel bearing apparatus, a drive shaft and a constant velocity universal joint at a side of a differential unit is united so as to enable the automobile manufacturer to assemble the axle module to the knuckle.

It is preferable as defined in claim 2 that the pulser ring comprises an annular supporting member formed by pressing a steel sheet and a magnetic encoder bonded on the annular supporting member, and that the encoder is formed by an elastomer which is mingled with magnetic powder and has magnetic poles S, N alternately arranged along its circumferential direction. This makes it possible to reduce the manufacturing cost, weight and size of the wheel bearing apparatus.

It is also preferable as defined in claim 3 that the annular supporting member is formed by pressing a stainless steel sheet or a preserved cold rolled sheet. This makes it possible to prevent generation of rust for a long term and thus to improve the durability of the wheel bearing apparatus.

It is preferable as defined in claim 4 that a seal is mounted in an opening of an annular space formed between the outer member and the outer joint member at inner side ends thereof, that the seal comprises an annular sealing plate and a slinger each having a substantially L-shaped cross-section and oppositely arranged each other, and that the annular supporting member is formed integrally with the slinger. This makes it possible to reduce the number of parts and steps of assembly and thus to further improve the workability in assembly.

It is also preferable as defined in claim 5 that the sensor is fitted in the mounting aperture of the knuckle so that it does not extend beyond the inner diameter of the knuckle and is retracted from the inner diameter by a predetermined gap. This makes it possible to prevent the magnetic encoder and sensor from being damaged by interference therebetween during assembly of the wheel bearing assembly. According to claim 6, there is also provided a wheel bearing apparatus for a driving wheel formed as a unit of a hub wheel, a double row rolling bearing and a constant velocity universal joint, in which the double row rolling bearing comprising: an outer member integrally formed, on its outer circumference, with a body mounting flange to be mounted on a knuckle and formed, on its inner circumference, with double row outer raceway surfaces;
an inner member including a hub wheel and an outer joint member of the constant velocity universal joint, the hub wheel having a wheel mounting flange formed integrally therewith at one end thereof and a cylindrical portion axially extending from the wheel mount flange and formed, on the outer circumference of the cylindrical portion, an inner raceway surface corresponding to one of the double row outer raceway surfaces, and the outer joint member being formed, on its outer circumference, with another inner raceway surface corresponding to the other of the double row outer raceway surfaces and having a hollow shaft portion axially extending from said another inner raceway surface to be inserted into the hub wheel; double row rolling elements arranged rollably between the outer and inner raceway surfaces; and seals mounted in opening portions of an annular space formed between the outer member and the inner member at opposite ends thereof; and the hub wheel and the outer joint member being integrally connected via plastic deformation formed by plastically deformation of the shaft portion to caulking it onto the hub wheel characterized in: that a sensor is fitted in a mounting aperture formed in the knuckle radially passed therethrough, that a pulser ring is mounted on the outer circumferential surface of the outer joint member, said pulser ring includes a supporting member with a crank shaft cross-section having one end secured with the outer joint member and the other end axially extending from the secured end and a magnetic encoder on the axially extending end of the supporting member, said magnetic encoder opposes the sensor via a predetermined radial gap, and that the outer diameter of the pulser ring is smaller than an inner diameter of the knuckle.

### Effects of the Invention

According to the present invention, since the wheel bearing apparatus for a driving wheel is formed as a unit of a hub wheel, a double row rolling bearing and a constant velocity universal joint, and the double row rolling bearing comprises an outer member integrally formed, on its outer circumference, with a body mounting flange to be mounted on a knuckle and formed, on its inner circumference, with double row outer raceway surfaces; an inner member including a hub wheel and an outer joint member of the constant velocity universal joint, the hub wheel having a wheel mounting flange formed integrally therewith at one end thereof and a cylindrical portion axially extending from the wheel mount flange and formed, on the outer circumference of the cylindrical portion, an inner raceway surface corresponding to one of the double row outer raceway surfaces, and the outer joint member being formed, on its outer circumference, with another inner raceway surface corresponding to the other of the double row outer raceway surfaces and having a hollow shaft portion axially extending from said another inner raceway surface to be inserted into the hub wheel; double row rolling elements arranged rollably between the outer and inner raceway surfaces; and seals mounted in opening portions of an annular space formed between the outer member and the inner member at opposite ends thereof; and the hub wheel and the outer joint member being integrally connected via plastic deformation formed by plastically deformation of the shaft portion to caulking it onto the hub wheel and is characterized in that a sensor is fitted in a mounting aperture formed in the knuckle radially passed therethrough, that a pulser ring is mounted on an inner side of the bearing apparatus from the inner annular space on the outer circumferential surface of the outer joint member so that it is opposed to the sensor via a predetermined radial gap, that the outer diameter of the pulser ring is smaller than the inner diameter of the knuckle, and that the outer diameter of the constant velocity joint is smaller than the inner diameter of the knuckle, it is possible to provide a wheel bearing apparatus for a driving wheel which can eliminate a troublesome work, improve the workability in assembly, and supply to an automobile manufacturer the wheel bearing apparatus as a so-called axle module in which the wheel bearing apparatus, a drive shaft and a constant velocity universal joint at a side of a differential unit is united so as to enable the automobile manufacturer to assemble the axle module to the knuckle.

### Best mode for carrying out the Invention

Best mode for carrying out the present invention is a wheel bearing apparatus for a driving wheel formed as a unit of a hub wheel, a double row rolling bearing and a constant velocity universal joint, in which the double row rolling bearing comprising an outer member integrally formed, on its outer circumference, with a body mounting flange to be mounted on a knuckle and formed, on its inner circumference, with double row outer raceway surfaces; an inner members including a hub wheel and an outer joint member of the constant velocity universal joint, the hub wheel having a wheel mounting flange formed integrally therewith at one end thereof and a cylindrical portion axially extending from the wheel mount flange and formed, on the outer circumference of the cylindrical portion, an inner raceway surface corresponding to one of the double row outer raceway surfaces, and the outer joint member being formed, on its outer circumference, with another inner raceway surface corresponding to the other of the double row outer raceway surfaces and having a hollow shaft portion axially extending from said another inner raceway surface to be inserted into the hub wheel; double row rolling elements arranged rollably between the outer and inner raceway surfaces; and seals mounted in opening portions of an annular space formed between the outer member and the inner member at opposite ends thereof; and the hub wheel and the outer joint member being integrally connected via plastic deformation formed by plastically deformation of the shaft portion to caulking it onto the hub wheel characterized in that a sensor is fitted in a mounting aperture formed in the knuckle radially passed therethrough, that a pulser ring is mounted on the outer circumferential surface of the outer joint member so that it is opposed to the sensor via a predetermined radial gap, that the pulser ring comprises an annular supporting member formed by pressing a steel sheet and a magnetic encoder bonded on the annular supporting member, that the encoder is formed by an elastomer which is mingled with magnetic powder and has magnetic poles S, N alternately arranged along its circumferential direction, and that the outer diameter of the pulser ring is smaller than the inner diameter of the knuckle.

### First embodiment

Preferred embodiments of the present invention will be described with reference to accompanied drawings.

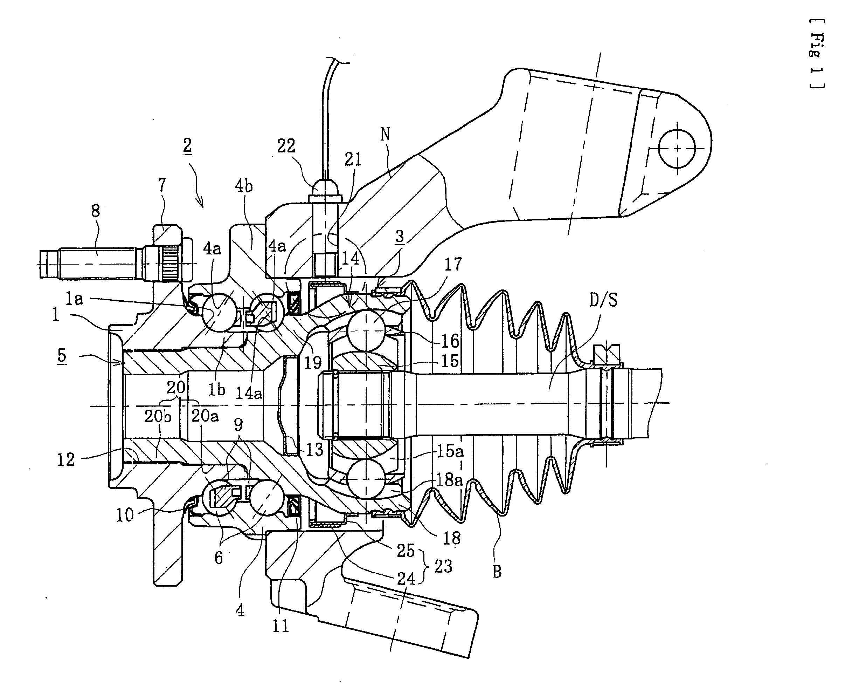

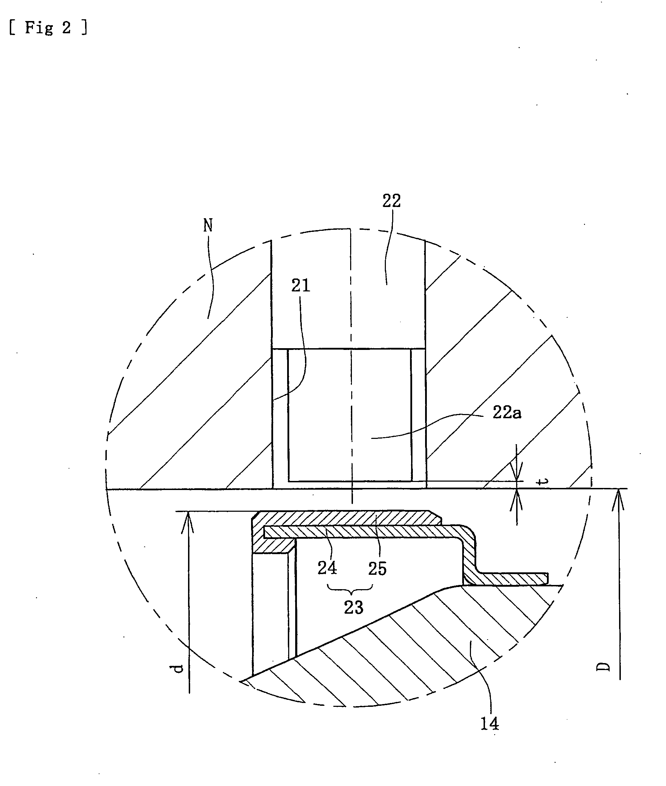

Fig. 1 is a longitudinal-section view of a first embodiment of a wheel bearing apparatus for a driving wheel of the present invention; and Fig. 2 is a partially enlarged longitudinal-section view of Fig. 1. In the description of the present invention, an outer side of a bearing apparatus when it is mounted on a vehicle is referred to as an outer side (left side in drawings), and an inner side of a bearing apparatus when it is mounted on a vehicle is referred to as an inner side (right side in drawings).

The wheel bearing apparatus for a driving wheel of the present invention is formed as a unit of a hub wheel 1, double row rolling bearing 2 and a constant velocity universal joint 3 and thus has a structure of a so-called fourth generation type. The double row rolling bearing 2 comprises an outer member 4, an inner member 5 and double row rolling elements (balls) 6, 6. The outer member 4 is made of medium carbon steel such as S53C including carbon of 0.40~0.80% by weight and integrally formed on its outer circumference with a body mounting flange 4b adapted to be mounted on a knuckle N of a vehicle forming a suspension apparatus and also formed on its inner circumference with double row outer raceway surfaces 4a, 4a. At least the double row outer raceway surfaces 4a, 4a are hardened by high frequency induction hardening as having 58-64 HRC.

On the other hand the inner member 5 comprises the hub wheel 1 and an outer joint member 14 to be inserted into the hub wheel 1 as hereinafter described. The hub wheel 1 is made of medium carbon steel such as S53C including carbon of 0.40~0.80% by weight and has at its outer side end a wheel mounting flange 7 for mounting a wheel (not shown) thereon and a plurality of hub bolts 8 equidistantly arranged along the periphery of the wheel mounting flange 7. The hub wheel 1 has on its outer circumference one inner raceway surface (outer side inner raceway surface) la arranged oppositely to one of the double row outer raceway surfaces 4a, 4a and a cylindrical portion 1b. The hub wheel 1 is formed with a hardened layer having surface hardness 58~64 HRC by high frequency induction hardening from a seal land portion on which an outer side seal 10 sliding contacts to the inner raceway surface 1a and the cylindrical portion 1b. This not only improves the anti-friction characteristics of the seal lad portion at the base of the wheel mounting flange 7 but improves the durability of the hub wheel 1 with providing with a sufficient mechanical strength against the rotary bending load applied to the wheel mounting flange 7.

The constant velocity universal joint 3 comprises the outer joint member 14, a joint inner ring 15, cage 16 and torque transmitting balls 17. The outer joint member 14 is made of medium carbon steel such as S53C including carbon of 0.40~0.80% by weight and comprises a cup shaped mouth portion 18, a shoulder portion 19 forming the bottom of the mouth portion 18, and a cylindrical shaft portion 20 axially extending from the shoulder portion 19 which are integrally formed each other. The shaft portion 20 is formed with a cylindrical spigot portion 20a fitted in the cylindrical portion 1b of the hub wheel 1 via a predetermined interference and a fitting portion 20b at the end of the spigot portion 20a.

An inner surface of the mouth portion 18 is formed with axially extending curved track grooves 18a and an outer surface of the joint inner ring 15 is formed with track grooves 15a corresponding to the track grooves 18a. An outer circumferential surface of the shoulder portion 19 is formed with inner raceway surface (inner side inner raceway surface) 14a corresponding to another one of the double row raceway surfaces 4a, 4a. A hardened layer having the surface hardness of HRC 58~64 is formed by high frequency induction heating in a region from a seal land portion on which the inner side seal 11 sliding contacts to the inner raceway surface 14a and the shaft portion 20 and track grooves 18a, 15a. The fitting portion 20b is remained as raw material itself without being hardened after having been forged.

Double row rolling elements (balls) 6, 6 are arranged between the double row outer raceway surfaces 4a, 4a of the outer member 4 and corresponding double row inner raceway surfaces 1a, 14a of the inner member 5 and held freely rollably by cages 9, 9. Seals 10, 11 are mounted in opening portions of an annular space formed between the outer member 4 and the inner member 5 in order to prevent leak of grease contained within the bearing as well as ingress of rain water or dusts into the inside of the bearing. Although it is shown a double row angular ball bearing using balls as the rolling elements 6, 6, the present invention is not limited to such an embodiment and thus a double row tapered roller bearing using tapered rollers as rolling elements may be used.

The inner circumferential surface of the hub wheel 1 is formed with an irregular portion 12 hardened by high frequency induction heating as having a surface hardness of HRC 54-64. The irregular portion 12 is formed as having a crisscross pattern knurl formed by combining a plurality of independent annular grooves formed by e.g. a lathe and a plurality of axial grooves formed by e.g. broaching as orthogonally crossed grooves or mutually inclined helical grooves. Each projection forming the irregular portion 12 may be pointed like a pyramid to increase the biting ability of the irregular portion 12.

Uniting connection of the hub wheel 1 and the outer joint member 14 is performed by inserting the shaft portion 20 into the hub wheel 1 so that a shoulder 19 of the outer joint member 14 is abutted against the end face of the cylindrical portion 1b of the hub wheel 1, then by expanding the fitting portion 20b of the shaft portion 20 radially outward and forcing the material of the fitting portion 20b to bite into the hardened irregular portion 12 of the hub wheel 1 via plastic deformation of the fitting portion 20b. This makes it possible to reduce the size and weight of the wheel bearing apparatus and to improve the strength and durability of the hub wheel as well as to maintain its preload for a long term. An end cap 13 mounted in the end of the hollow shaft 20 and a boot B mounted on an opening at a larger diameter end of the outer joint member 14 prevent leakage of grease contained within the mouth portion 18 and entering of rain water or dusts into inside of the joint. In addition, another end cap is also mounted in the opened end of the hub wheel 1 to prevent entering of rain water and thus generation of rust at the connected portion via the plastic deformation.

Other connecting means between the hub wheel 1 and the outer joint member 14 may be adopted. For example, they can be axially secured by inserting the shaft portion of the outer joint member into the hub wheel and then by caulking (a so-called swing caulking) the end of the shaft portion projected from the hub wheel radially outward.

In this embodiment a radially extending mounting aperture 21 is formed in the knuckle N as a through aperture into which the sensor 22 is fitted. In addition a pulser ring 23 is mounted the outer circumferential surface of the outer joint member 14 so that it is opposed to the sensor 22 via a predetermined radial gap (air gap). As shown in an enlarged view of Fig. 2, the pulser ring 23 comprises an annular supporting member 24 and a magnetic encoder 25 bonded to the annular supporting member 24.

The annular supporting ring 24 is formed as having a generally annular configuration having a crank-shaped cross-section by performing plastic working such as pressing, drawing or burring a magnetized metal sheet such as an austenitic stainless steel sheet (JIS SUS 304 etc) or a preserved cold rolled sheet (JIS SPCC etc). This makes it possible to reduce the manufacturing cost, weight and size of the wheel bearing apparatus as well as to prevent generation of rust for a long term and thus to improve the durability of the wheel bearing apparatus. On the other hand, that the magnetic encoder 25 is formed by an elastomer such as rubber which is mingled with magnetic powder and has magnetic poles S, N alternately arranged along its circumferential direction and is integrally bonded to the supporting ring 24 via vulcanized adhesion.

In this embodiment the outer diameter d of the magnetic encoder 25 is set smaller than the inner diameter D of the knuckle N (d < D) and the sensor 22 is fitted in the mounting aperture 21 of the knuckle N so that the tip end (detecting portion) 22a of the sensor 22 does not extend beyond the inner diameter D of the knuckle N and is retracted therefrom by a predetermined gap t. This enables to eliminate troublesome workings and improve workability in assembly of the wheel bearing apparatus as well as to prevent any damage of the magnetic encoder 25 and the sensor 22 which would be caused by interference therebetween. Furthermore it is possible to provide a wheel bearing apparatus for a driving wheel which can be supplied to an automobile manufacturer the wheel bearing apparatus as an axle module in which the wheel bearing apparatus, a drive shaft D/S (Fig. 1) and a constant velocity universal joint (not shown) at a side of a differential unit is united so as to enable the automobile manufacturer to assemble the axle module to the knuckle N.

Although it is illustrated herein the magnetic encoder 25 comprising a rubber magnet as the pulser ring 23, it may be possible to use a sintered magnet or a comb type or ladder type magnet (not shown) which is formed as having an annular configuration by pressing a steel sheet and provided a plurality of through apertures (portions to be detected) equidistantly along its circumferential direction. It may be also formed of sintered metal in which projections and recesses are arranged equidistantly along its circumferential direction. In addition, although it is exemplary illustrated that the sensor 22 comprises a magnetic detecting element such as a Hall element, a magnetic resistance element (MR element) etc for changing its characteristics in accordance with the flowing direction of magnetic flux, and an IC incorporated with a wave forming circuit for rectifying the output wave form of magnetic detecting element, the present invention is not limited to such a structure and an active type or a passive type sensor may be used in combination with the pulser ring 23.

### Second embodiment

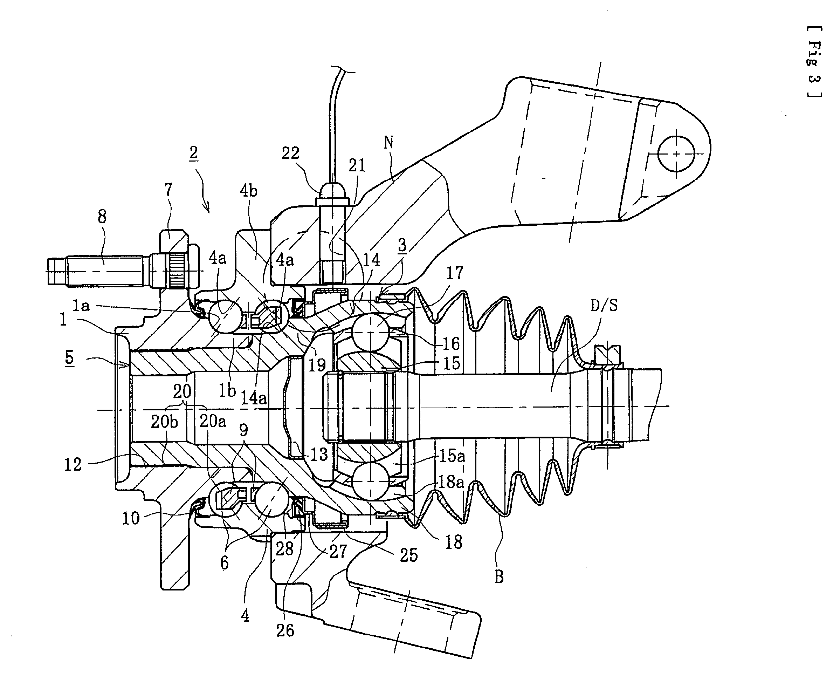

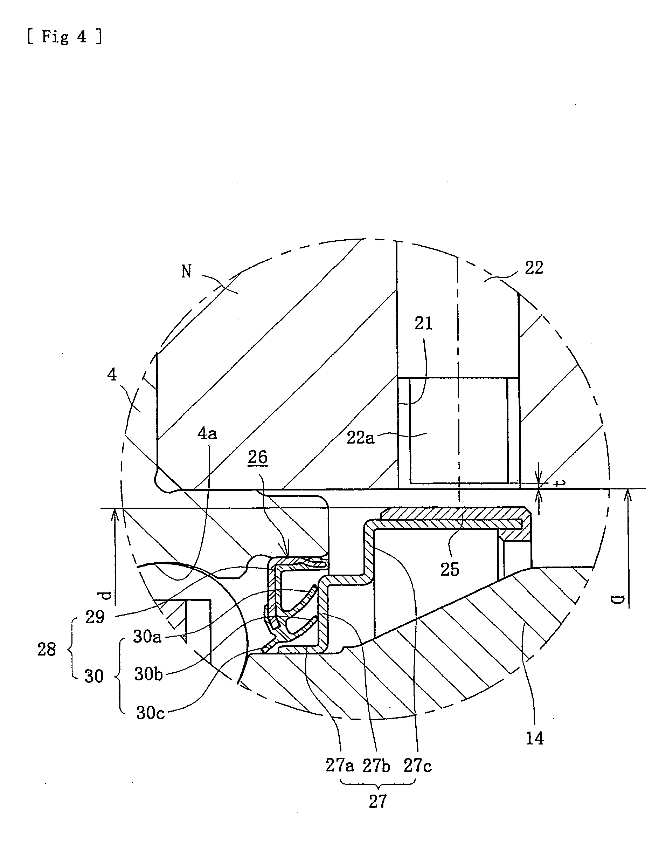

Fig. 3 is a longitudinal-section view of a second embodiment of a wheel bearing apparatus for a driving wheel of the present invention; and Fig. 4 is a partially enlarged longitudinal-section view of Fig. 3. Since this second embodiment is different from the first embodiment only in the structure of the pulser ring, same reference numerals are used also in this embodiment for designating same parts having same functions of those used in the first embodiment.

In this embodiment the magnetic encoder 25 is integrally bonded to a slinger 27 forming an inner side seal 26. That is, the seal 26 is mounted in an opening portion of an annular space formed between the outer member 4 and the outer joint member 14 and the slinger 27 of the seal 26 is press fitted onto the outer circumferential surface of the shoulder 19 of the outer joint member 14. As shown in the enlarged view of Fig. 4, the seal 26 comprises the slinger 27 and an annular sealing plate 28. The slinger 27 is formed by pressing an austenitic stainless steel sheet (JIS SUS 304 etc) or a preserved cold rolled sheet (JIS SPCC etc) and comprises a cylindrical portion 27a press fitted onto the outer joint member 14, an upstanding portion 27b extending radially outward from the cylindrical portion 27a, and a supporting portion 27c extending from the tip of the upstanding portion 27b and having a crank shaped cross-section.

On the other hand, the sealing plate 28 comprises a metal core 29 and a sealing member 30 bonded to the metal core 29 via vulcanized adhesion and is formed as an annular member having a substantially L-shaped cross-section. The metal core 29 is formed by pressing an austenitic stainless steel sheet (JIS SUS 304 etc) or a preserved cold rolled sheet (JIS SPCC etc).

The sealing member 30 is formed of elastic member such as nitrile rubber and comprises first and second side lips 30a and 30b sliding contact with the upstanding portion 27b of the slinger 27 and a radial lip 30c sliding contacting directly with the shoulder 19 of the outer joint member 14. Each of the first and second side lips 30a and 30b has a cross-section extending radially outward and their tips sliding contact with the upstanding portion 27b of the slinger 27 via a predetermined interference. The magnetic encoder 25 is bonded to the supporting portion 27c of the slinger 27 and arranged oppositely to the tip end 22a of the sensor 22 via a predetermined radial gap.

Similarly to the first embodiment, the outer diameter d of the magnetic encoder 25 is set smaller than the inner diameter D of the knuckle N (d < D) and the sensor 22 is fitted in the mounting aperture 21 of the knuckle N so that the tip end (detecting portion) 22a of the sensor 22 does not extend beyond the inner diameter D of the knuckle N and is retracted therefrom by a predetermined gap t. This enables to supply to an automobile manufacturer the wheel bearing apparatus as an axle module so as to enable the automobile manufacturer to assemble the axle module to the knuckle N as well as to prevent any damage of the magnetic encoder 25 and the sensor 22 which would be caused by interference therebetween. Furthermore since the magnetic encoder 25 is formed integrally with the slinger 27 of the seal 26, it is possible to reduce the number of structural parts and manufacturing steps and thus to further improve the workability in assembly.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The wheel bearing apparatus for a driving wheel of the present invention can be applied to wheel bearing apparatus for a driving wheel of the fourth generation type in which the hub wheel and the constant velocity universal joint are united by connection via plastic deformation.

### Brief Description of the Drawings

Fig. 1 is a longitudinal-section view of a first embodiment of a wheel bearing apparatus for a driving wheel of the present invention;
Fig. 2 is a partially enlarged longitudinal-section view of Fig. 1;
Fig. 3 is a longitudinal-section view of a second embodiment of a wheel bearing apparatus for a driving wheel of the present invention;
Fig. 4 is a partially enlarged longitudinal-section view of Fig. 3;
Fig. 5 is a longitudinal-section view of a wheel bearing apparatus for a driving wheel of the prior art; and
Fig. 6 is a partially enlarged longitudinal-section view of Fig. 5.

### Explanation of Reference numeral

- 1...: hub wheel
- 1a, 14a...: inner raceway surface
- 1b...: cylindrical portion
- 2...: double row rolling bearing
- 3...: constant velocity universal joint
- 4...: outer member
- 4a...: outer raceway surfaces
- 4b...: body mounting flange
- 5...: inner member
- 6...: rolling elements
- 7...: wheel mounting flange
- 8...: hub bolts
- 9...: cages
- 10, 11, 26...: steal
- 12...: irregular portion
- 13...: end cap
- 14...: outer joint member
- 15...: joint inner ring
- 15a, 18a...: track groove
- 16...: cage
- 17...: torque transmitting balls
- 18...: mouth portion
- 19...: shoulder portion
- 20...: shaft portion
- 20a...: spigot portion
- 20b...: fitting portion
- 21...: mounting aperture
- 22...: sensor
- 22a...: tip portion
- 23...: pulser ring
- 24...: annular supporting member
- 25...: magnetic encoder
- 27...: slinger
- 27a...: cylindrical portion
- 27b...: upstanding portion
- 27c...: supporting portion
- 28...: sealing plate
- 29...: metal core
- 30...: sealing member
- 30a...: first side lip
- 30b...: second side lip
- 30c...: radial lip
- 51...: outer member
- 51a...: outer raceway surfaces
- 51b...: body mounting flange
- 51c...: end portion
- 52...: hub wheel
- 52a, 55a...: inner raceway surface
- 52b...: cylindrical portion
- 53...: wheel mounting flange
- 54...: hub bolts
- 55...: outer joint member
- 56...: inner member
- 57...: balls
- 58...: cages
- 59...: outer side seal
- 60...: inner side seal
- 61...: constant velocity universal joint
- 62...: mouth portion
- 63...: shoulder portion
- 63a...: cylindrical surface portion
- 63b...: stepped surface
- 63c...: second cylindrical surface portion
- 64...: shaft portion
- 64a...: spigot portion
- 64b...: fitting portion
- 65...: irregular portion
- 66...: cover
- 66a...: cylindrical portion of larger diameter
- 66b...: cylindrical portion of smaller diameter
- 67...: sealing member
- 67a, 67b, 67c...: sealing lip
- 68...: encoder
- 69...: sensor
- 69a...: inserting portion
- 69b...: mounting flange portion
- 70...: flat portion
- 70a...: mounting aperture
- 71...: harness
- B...: boot
- d...: outer diameter of magnetic encoder
- d1...: outer diameter of cylindrical portion of larger diameter
- d2...: outer diameter of encoder
- D...: inner diameter of knuckle
- D1...: outer diameter of end portion of outer member
- D2...: outer diameter of cylindrical surface portion
- D/S...: drive shaft
- N...: knuckle

## Claims

1. A wheel bearing apparatus for a driving wheel formed as a unit of a hub wheel (1), a double row rolling bearing (2) and a constant velocity universal joint (3), in which the double row rolling bearing (2) comprising:
an outer member (4) integrally formed, on its outer circumference, with a body mounting flange (4b) to be mounted on a knuckle (N) and formed, on its inner circumference, with double row outer raceway surfaces (4a and 4a) ;
an inner member (5) including a hub wheel (1) and an outer joint member (14) of the constant velocity universal joint (3), the hub wheel (1) having a wheel mounting flange (7) formed integrally therewith at one end thereof and a cylindrical portion (1b) axially extending from the wheel mount flange (7) and formed, on the outer circumference of the cylindrical portion (1b),
an inner raceway surface (1a) corresponding to one of the double row outer raceway surfaces (4a and 4a), and the outer joint member (14) being formed, on its outer circumference, with another inner raceway surface (14a) corresponding to the other of the double row outer raceway surfaces (4a and 4a) and having a hollow shaft portion (20) axially extending from said another inner raceway surface (14a) to be inserted into the hub wheel (1) ;
double row rolling elements (6) arranged rollably between the outer and inner raceway surfaces (4a, 4a and 1a, 14a); and
seals (10 and 11) mounted in opening portions of an annular space formed between the outer member (4) and the inner member (5) at opposite ends thereof; and the hub wheel (1) and the outer joint member (14) being integrally connected via plastic deformation formed by plastically deformation of the shaft portion (20) to caulking it onto the hub wheel (1) **characterized in: that** a sensor (22) is fitted in a mounting aperture (21) formed in the knuckle (N) radially passed therethrough, that a pulser ring (23) is mounted on an inner side of the bearing apparatus from the inner annular space on the outer circumferential surface of the outer joint member (14) so that it is opposed to the sensor (22) via a predetermined radial gap, that the outer diameter (d) of the pulser ring (23) is smaller than the inner diameter (D) of the knuckle (N), and that the outer diameter of the constant velocity joint (3) is smaller than the inner diameter (D) of the knuckle (N).

2. A wheel bearing apparatus for a driving wheel of claim 1 wherein the pulser ring (23) comprises an annular supporting member (24) formed by pressing a steel sheet and a magnetic encoder (25) bonded on the annular supporting member (24), and wherein the encoder (25) is formed by an elastomer which is mingled with magnetic powder and has magnetic poles S, N alternately arranged along its circumferential direction.

3. A wheel bearing apparatus for a driving wheel of claim 1 or 2 wherein the annular supporting member (24) is formed
by pressing a stainless steel sheet or a preserved cold rolled sheet.

4. A wheel bearing apparatus for a driving wheel of claim 2 or 3 wherein a seal (26) is mounted in an opening of an annular space formed between the outer member (4) and the outer joint member (14) at inner side ends thereof, wherein the seal (26) comprises an annular sealing plate (28) and a slinger (27) each having a substantially L-shaped cross-section and oppositely arranged each other, and wherein the annular supporting member is formed integrally with the slinger (27).

5. A wheel bearing apparatus for a driving wheel of any one of claims 1~4 wherein the sensor (22) is fitted in the mounting aperture (21) of the knuckle (N) so that it does not extend beyond the inner diameter (D) of the knuckle (N) and is retracted from the inner diameter (D) by a predetermined gap (t).

6. A wheel bearing apparatus for a driving wheel formed as a unit of a hub wheel (1), a double row rolling bearing (2) and a constant velocity universal joint (3), in which the double row rolling bearing (2) comprising:
an outer member (4) integrally formed, on its outer circumference, with a body mounting flange (4b) to be mounted on a knuckle (N) and formed, on its inner circumference, with double row outer raceway surfaces (4a and 4a);
an inner member (5) including a hub wheel (1) and an outer joint member (14) of the constant velocity universal joint (3), the hub wheel (1) having a wheel mounting flange (7) formed integrally therewith at one end thereof and a cylindrical portion (1b) axially extending from the wheel mount flange (7) and formed, on the outer circumference of the cylindrical portion (1b),
an inner raceway surface (1a) corresponding to one of the double row outer raceway surfaces (4a and 4a), and the outer joint member (14) being formed, on its outer circumference, with another inner raceway surface (14a) corresponding to the other of the double row outer raceway surfaces (4a and 4a) and having a hollow shaft portion (20) axially extending from said another inner raceway surface (14a) to be inserted into the hub wheel (1);
double row rolling elements (6) arranged rollably between the outer and inner raceway surfaces (4a, 4a and 1a, 14a); and
seals (10 and 11) mounted in opening portions of an annular space formed between the outer member (4) and the inner member (5) at opposite ends thereof; and the hub wheel (1) and the outer joint member (14) being integrally connected via plastic deformation formed by plastically deformation of the shaft portion (20) to caulking it onto the hub wheel (1) **characterized in: that** a sensor (22) is fitted in a mounting aperture (21) formed in the knuckle (N) radially passed therethrough, that a pulser ring (23) is mounted on the outer circumferential surface of the outer joint member (14), said pulser ring (23) includes a supporting member (24) with a crank shaft cross-section having one end secured with the outer joint member (14) and the other end axially extending from the secured end and a magnetic encoder (25) on the axially extending end of the supporting member (24), said magnetic encoder (25) opposes the sensor (22) via a predetermined radial gap, and that the outer diameter (d) of the pulser ring (23) is smaller than an inner diameter (D) of the knuckle (N).

## Patentansprüche

1. Radlagervorrichtung für ein Antriebsrad, die als eine Einheit aus einer Radnabe (1), einem doppelreihigen Wälzlager (2) und einem Gleichlaufgelenk (3) ausgebildet ist, wobei das doppelreihige Wälzlager (2) Folgendes umfasst:
ein äußeres Element (4), das an seinem Außenumfang integral mit einem Karosseriemontageflansch (4b) ausgebildet ist, der an einem Achsschenkel (N) zu montieren ist, und an seinem Innenumfang mit doppelreihigen äußeren Laufflächen (4a und 4a) ausgebildet ist;
ein inneres Element (5), das eine Radnabe (1) und ein äußeres Gelenkelement (14) des Gleichlaufgelenks (3) enthält, wobei die Radnabe (1) einen Radmontageflansch (7) aufweist, der integral mit ihm an einem Ende ausgebildet ist, und einen zylindrischen Abschnitt (1b) aufweist, der sich axial von dem Radmontageflansch (7) erstreckt, wobei am Außenumfang des zylindrischen Abschnitts (1b) eine innere Lauffläche (1a) ausgebildet ist, die einer der doppelreihigen äußeren Laufflächen (4a und 4a) entspricht, und wobei das äußere Gelenkelement (14) an seinem Außenumfang mit einer weiteren inneren Lauffläche (14a) ausgebildet ist, die der anderen der doppelreihigen äußeren Laufflächen (4a und 4a) entspricht, und einen hohlen Schaftabschnitt (20) aufweist, der sich axial von der weiteren inneren Lauffläche (14a) erstreckt, um in die Radnabe (1) eingeführt zu werden;
doppelreihige Wälzelemente (6), die rollfähig zwischen den äußeren und inneren Laufflächen (4a, 4a und 1a, 14a) angeordnet sind; und
Dichtungen (10 und 11), die in Öffnungsabschnitten eines Ringraums montiert sind, der zwischen dem äußeren Element (4) und dem inneren Element (5) an gegenüberliegenden Enden ausgebildet ist; und
wobei die Radnabe (1) und das äußere Gelenkelement (14) mittels plastischer Verformung integral miteinander verbunden sind, wobei die plastische Verformung durch plastisches Verformen des Schaftabschnitts (20) bewerkstelligt wird, um ihn auf die Radnabe (1) zu stauchen, **dadurch gekennzeichnet:**
**dass** ein Sensor (22) in eine Montageöffnung (21) eingesetzt ist, die in dem Achsschenkel (N) ausgebildet ist und radial dort hindurch verläuft, dass ein Impulsgeberring (23) auf einer Innenseite der Lagervorrichtung vom inneren Ringraum aus an der Außenumfangsfläche des äußeren Gelenkelements (14) so montiert ist, dass er dem Sensor (22) mit einem vorgegebenen radialen Spalt gegenüberliegt, dass der Außendurchmesser (d) des Impulsgeberrings (23) kleiner ist als der Innendurchmesser (D) des Achsschenkels (N), und dass der Außendurchmesser des Gleichlaufgelenks (3) kleiner ist als der Innendurchmesser (D) des Achsschenkels (N).

2. Radlagervorrichtung für ein Antriebsrad nach Anspruch 1, wobei der Impulsgeberring (23) ein ringförmiges Stützelement (24), das durch Pressen eines Stahlblechs gebildet wird, sowie einen Magnetcodierer (25), der an das ringförmige Stützelement (24) gebondet ist, umfasst, und wobei der Codierer (25) durch ein Elastomer gebildet wird, das mit Magnetpulver vermengt ist und magnetische Pole S, N aufweist, die im Wechsel entlang seiner Umfangsrichtung angeordnet sind.

3. Radlagervorrichtung für ein Antriebsrad nach Anspruch 1 oder 2, wobei das ringförmige Stützelement (24) durch Pressen eines Edelstahlblechs oder eines geschützten Kaltwalzblechs gebildet wird.

4. Radlagervorrichtung für ein Antriebsrad nach Anspruch 2 oder 3, wobei eine Dichtung (26) in einer Öffnung eines Ringraums montiert ist, der zwischen dem äußeren Element (4) und dem äußeren Gelenkelement (14) an innenseitigen Enden ausgebildet ist, wobei die Dichtung (26) eine ringförmige Dichtungsplatte (28) und einen Abstreifring (27) umfasst, die jeweils einen im Wesentlichen L-förmigen Querschnitt aufweisen und einander gegenüberliegend angeordnet sind, und wobei das ringförmige Stützelement integral mit dem Abstreifring (27) ausgebildet ist.

5. Radlagervorrichtung für ein Antriebsrad nach einem der Ansprüche 1 bis 4, wobei der Sensor (22) so in die Montageöffnung (21) des Achsschenkels (N) eingesetzt ist, dass er sich nicht über den Innendurchmesser (D) des Achsschenkels (N) hinaus erstreckt und vom Innendurchmesser (D) um einen vorgegebenen Spalt (t) zurückgezogen ist.

6. Radlagervorrichtung für ein Antriebsrad, die als eine Einheit aus einer Radnabe (1), einem doppelreihigen Wälzlager (2) und einem Gleichlaufgelenk (3) ausgebildet ist, wobei das doppelreihige Wälzlager (2) Folgendes umfasst:
ein äußeres Element (4), das an seinem Außenumfang integral mit einem Karosseriemontageflansch (4b) ausgebildet ist, der an einem Achsschenkel (N) zu montieren ist, und an seinem Innenumfang mit doppelreihigen äußeren Laufflächen (4a und 4a) ausgebildet ist;
ein inneres Element (5), das eine Radnabe (1) und ein äußeres Gelenkelement (14) des Gleichlaufgelenks (3) enthält, wobei die Radnabe (1) einen Radmontageflansch (7) aufweist, der integral mit ihm an einem Ende ausgebildet ist, und einen zylindrischen Abschnitt (1b) aufweist, der sich axial von dem Radmontageflansch (7) erstreckt, wobei am Außenumfang des zylindrischen Abschnitts (1b) eine innere Lauffläche (1a) ausgebildet ist, die einer der doppelreihigen äußeren Laufflächen (4a und 4a) entspricht, und wobei das äußere Gelenkelement (14) an seinem Außenumfang mit einer weiteren inneren Lauffläche (14a) ausgebildet ist, die der anderen der doppelreihigen äußeren Laufflächen (4a und 4a) entspricht, und einen hohlen Schaftabschnitt (20) aufweist, der sich axial von der weiteren inneren Lauffläche (14a) erstreckt, um in die Radnabe (1) eingeführt zu werden;
doppelreihige Wälzelemente (6), die rollfähig zwischen den äußeren und inneren Laufflächen (4a, 4a und 1a, 14a) angeordnet sind; und
Dichtungen (10 und 11), die in Öffnungsabschnitten eines Ringraums montiert sind, der zwischen dem äußeren Element (4) und dem inneren Element (5) an gegenüberliegenden Enden ausgebildet ist; und
wobei die Radnabe (1) und das äußere Gelenkelement (14) mittels plastischer Verformung integral miteinander verbunden sind, wobei die plastische Verformung durch plastisches Verformen des Schaftabschnitts (20) bewerkstelligt wird, um ihn auf die Radnabe (1) zu stauchen, **dadurch gekennzeichnet:**
**dass** ein Sensor (22) in eine Montageöffnung (21) eingesetzt ist, die in dem Achsschenkel (N) ausgebildet ist und radial dort hindurch verläuft, dass ein Impulsgeberring (23) an der Außenumfangsfläche der äußeren Gelenkelement (14) montiert ist, wobei der Impulsgeberring (23) ein Stützelement (24) mit einem Kurbelquerschnitt enthält, das mit einem Ende an dem äußeren Gelenkelement (14) befestigt ist und dessen anderes Ende sich axial von dem befestigten Ende erstreckt, und einen Magnetcodierer (25) an dem sich axial erstreckenden Ende des Stützelements (24) enthält, wobei der Magnetcodierer (25) dem Sensor (22) mit einem vorgegebenen radialen Spalt gegenüberliegt, und dass der Außendurchmesser (d) des Impulsgeberrings (23) kleiner ist als ein Innendurchmesser (D) des Achsschenkels (N).

## Revendications

1. Dispositif porteur de roue pour une roue motrice, formé comme une unité d'un moyeu (1), un roulement à billes double (2), et un joint universel homocinétique (3), dans lequel le roulement à billes double (2) comprend :
un élément extérieur (4), formé, sur sa circonférence extérieure, avec une bride de montage de corps (4b) à monter sur une articulation (N), et formé, sur sa circonférence intérieure, de surfaces de roulement externes doubles (4a, 4a);
un élément interne (5) comprenant un moyeu (1) et un élément de joint externe (14) du joint universel homocinétique (3), le moyeu (1) ayant une bride de montage de roue (7) formé sur une extrémité de celui-ci et une partie cylindrique (1b) s'étendant axialement depuis la bride de montage de roue (7) et formée, sur la circonférence extérieure de la partie cylindrique (1b),
une surface de roulement interne (1a) correspondant à l'une des surfaces de roulement doubles externes (4a et
4a), l'élément de joint extérieur (14) étant formé, sur sa circonférence extérieure, d'une autre surface de roulement interne (14a) correspondant à l'autre surface de roulement double externe (4a et 4a) et ayant une partie d'arbre creuse (20) s'étendant axialement depuis ladite autre surface de roulement interne (14a) pour être insérée dans le moyeu (1);
des éléments de roulement double (6), pouvant librement entrer en rotation entre les surfaces de roulement externes et internes (4a, 4a et 1a, 14a); et
des joints d'étanchéité (10 et 11) montés dans les parties ouvertes d'un espace annulaire formé entre l'élément extérieur (4) et l'élément intérieur (5) sur ses extrémités opposées; et
le moyeu (1) et l'élément de joint extérieur (14) étant connectés par déformation plastique obtenue par déformation de la partie d'arbre (20) pour le calfater dans le moyeu (1), **caractérisé en ce**
**qu'**un capteur (22) est placé dans une ouverture de montage (21) formée dans l'articulation (N), passant radialement au travers, en ce qu'un anneau d'impulsion (23) est monté sur un côté intérieur du dispositif depuis l'espace annulaire interne sur la surface de circonférence extérieure de l'élément de joint externe (14) de sorte qu'il est opposé au capteur (22) via un intervalle radial prédéterminé, en ce que le diamètre extérieur (d) de l'anneau d'impulsion (23) est inférieur au diamètre intérieur (D) de l'articulation (N), et en ce que le diamètre extérieur du joint homocinétique (3) est inférieur au diamètre intérieur (D) de l'articulation (N).

2. Dispositif porteur de roue pour une roue motrice selon la revendication 1, où l'anneau d'impulsion (23) comprend un élément annulaire de support (24) formé par pression d'une feuille d'acier et d'un codeur magnétique (25) collé sur l'élément annulaire de support (24), et où le codeur (25) est formé d'un élastomère, qui est mélangé à une poudre magnétique et présente des pôles magnétiques S, N disposés alternativement sur sa circonférence.

3. Dispositif porteur de roue pour une roue motrice selon la revendication 1 ou 2, où l'élément annulaire de support (24) est formé par pression d'une feuille d'acier inoxydable ou d'une feuille roulée conservée à froid.

4. Dispositif porteur de roue pour une roue motrice selon la revendication 2 ou 3, où un joint d'étanchéité (26) est placé dans une ouverture d'un espace annulaire formé entre l'élément externe (4) et l'élément de joint externe (14) sur ses extrémités intérieures, où le joint d'étanchéité (26) comprend une plaque annulaire d'étanchéité (28) et un chasse-goutte (27), chacun ayant une coupe transversale sensiblement en L et agencés de manière opposée l'un par rapport à l'autre, et où l'élément annulaire de support est formé d'une pièce avec le chasse-goutte (27).

5. Dispositif porteur de roue pour une roue motrice selon l'une quelconque des revendications 1 à 4, où le capteur (22) est placé dans l'ouverture de montage (21) de l'articulation (N) de sorte qu'il ne s'étend pas au-delà du diamètre intérieur (D) de l'articulation (N) et qu'il est en retrait du diamètre intérieur (D) d'un intervalle prédéterminé (t).

6. Dispositif porteur de roue pour une roue motrice, formé comme une unité d'un moyeu (1), un roulement à billes double (2), et un joint universel homocinétique (3), dans lequel le roulement à billes double (2) comprend:
un élément extérieur (4), formé, sur sa circonférence extérieure, avec une bride de montage de corps (4b) à monter sur une articulation (N), et formé, sur sa circonférence intérieure, de surfaces de roulement externes doubles (4a, 4a);
un élément interne (5) comprenant un moyeu (1) et un élément de joint externe (14) du joint universel homocinétique (3), le moyeu (1) ayant une bride de montage de roue (7) formée sur une extrémité de celui-ci et une partie cylindrique (1b) s'étendant axialement depuis la bride de montage de roue (7) et formée, sur la circonférence extérieure de la partie cylindrique (1b),
une surface de roulement interne (1a) correspondant à l'une des surfaces de roulement doubles externes (4a et
4a), l'élément de joint extérieur (14) étant formé, sur sa circonférence extérieure, d'une autre surface de roulement interne (14a) correspondant à l'autre surface de roulement double externe (4a et 4a) et ayant une partie d'arbre creuse (20) s'étendant axialement depuis ladite autre surface de roulement interne (14a) pour être insérée dans le moyeu (1);
des éléments de roulement double (6), pouvant librement entrer en rotation entre les surfaces de roulement externes et internes (4a, 4a et 1a, 14a); et
des joints d'étanchéité (10 et 11) montés dans les parties ouvertes d'un espace annulaire formé entre l'élément extérieur (4) et l'élément intérieur (5) sur ses extrémités opposées et le moyeu (1) et l'élément de joint extérieur (14) étant connectés par déformation plastique obtenue par déformation de la partie d'arbre (20) pour le calfater dans le moyeu (1), **caractérisé en ce qu'**un capteur (22) est placé dans une ouverture de montage (21) formée dans l'articulation (N), passant radialement au travers, **en ce**
**qu'**un anneau d'impulsion (23) est monté sur la surface extérieure de circonférence de l'élément de joint extérieur (14), ledit anneau d'impulsion (23) comprend un élément de support (24) avec une section transversale d'arbre coudé, ayant une extrémité fixée à l'élément de joint extérieur (14) et l'autre extrémité s'étendant axialement depuis l'extrémité fixée, et un codeur magnétique (25) sur l'extrémité s'étendant axialement de l'élément de support (24), ledit codeur magnétique (25) s'oppose au capteur (22) via un intervalle radial prédéterminé, et **en ce que** le diamètre extérieur (d) de l'anneau d'impulsion (23) est inférieur au diamètre intérieur (D) de l'articulation (N).
